Europäisches Patentamt

European Patent Office

Office européen des brevets

(19)

(11) Veröffentlichungsnummer: **0 065 184**
**B1**

## (12) EUROPÄISCHE PATENTSCHRIFT

(45) Veröffentlichungstag der Patentschrift:
13.02.85

(51) Int. Cl.⁴: **B 01 D 35/06,** B 03 C 1/00

(21) Anmeldenummer: **82103822.1**

(22) Anmeldetag: **04.05.82**

(54) **Elektromagnetfilter.**

(30) Priorität: **13.05.81 DE 3119034**

(43) Veröffentlichungstag der Anmeldung:
**24.11.82 Patentblatt 82/47**

(45) Bekanntmachung des Hinweises auf die Patenterteilung:
**13.02.85 Patentblatt 85/7**

(84) Benannte Vertragsstaaten:
**CH FR GB IT LI**

(56) Entgegenhaltungen:
**FR - A - 2 164 697**
**GB - A - 1 204 324**
**GB - A - 1 555 670**

(73) Patentinhaber: **KRAFTWERK UNION AKTIENGESELLSCHAFT, Wiesenstrasse 35, D-4330 Mülheim (Ruhr) (DE)**

(72) Erfinder: **Donath, Gerhard, Höhenweg 4b, D-8521 Rathsberg (DE)**

(74) Vertreter: **Mehl, Ernst, Dipl.-Ing. et al, Postfach 22 01 76, D-8000 München 22 (DE)**

## Beschreibung

Die Erfindung betrifft ein Elektromagnetfilter mit einer Spule zur Magnetisierung von kugelförmigen Körpern aus ferromagnetischem Material in einem Gehäuse, das von dem zu filternden Medium durchströmt wird.

Elektromagnetfilter der oben genannten Art sind zum Beispiel in der Broschüre VGB-Speisewassertagung 1972, Seiten 80 bis 92 unter dem Titel »Betriebserfahrungen mit Elektromagnetfiltern und ihre Anwendung im Wasser-Dampfkreislauf von Kraftwerken« beschrieben. Die Kugeln bestehen aus Stahl oder Weicheisen. Sie haben Durchmesser von ca. 6 mm und werden mit magnetischen Feldstärken betrieben, die bei 150 000 A/m liegen. Damit kann man ferromagnetische Teilchen, insbesondere Magnetit, abscheiden, das in den Wasser- und Dampfleitungen von Kraftwerken auftritt, die aus eisenmetallischen Werkstoffen bestehen.

Der Erfindung liegt die Aufgabe zugrunde, den Abscheidungsgrad solcher Filter zu verbessern. Insbesondere sollen auch paramagnetische Schwebstoffe, zum Beispiel $\alpha$-Fe$_2$O$_3$ abgeschieden werden. Für diese Teilchen hat man bisher mechanische Filter eingesetzt, obwohl diese zum Beispiel wegen ihres hohen Strömungswiderstandes und der Notwendigkeit der Auswechselung nach Erschöpfung als nachteilig gegenüber Elektromagnetfiltern der oben genannten Art angesehen werden, die sich nicht verbrauchen sondern durch eine Spülung gereinigt werden können.

Gemäß der Erfindung ist vorgesehen, daß die Kugeloberfläche getrennte Partikel wesentlich größerer Permeabilität aufweist. Mit solchen getrennten, d. h. mit Abstand voneinander auf der Kugeloberfläche gelegenen Partikeln entstehen Feldstärkegradienten, die gegenüber homogenen Kugeloberflächen mehrfach größer sind. Solche hohen magnetischen Feldstärken ermöglichen die Anlagerung auch paramagnetischer Schwebstoffe, ohne daß die für Elektromagnetfilter mit Kugeln gegebene Reinigungsmöglichkeit verloren geht oder der Strömungswiderstand nennenswert erhöht wird.

Die Partikel bestehen vorteilhaft aus amorphen Metallen. Man kann zum Beispiel Partikel aus einer amorph weichmagnetischen Legierung auf der Basis von Fe und Ni verwenden. Diese Partikel haben eine Anfangspermeabilität von etwa 100 000 im Vergleich zu den rund 1000 betragenden Werten des als Kugelgrundmaterial verwendeten Stahls. Sie sind extrem hart und können deswegen in einen magnetischen Kugelgrundkörper, zum Beispiel aus Stahl, eingewalzt werden, so daß eine glatte Oberfläche trotz der Partikel vorhanden ist.

Bei einer anderen Ausführungsform sind die Partikel vorteilhaft in eine unmagnetische Schicht aus Kunstharz, Glas oder dergleichen eingebettet, damit die für den Betrieb günstige glatte Kugeloberfläche erhalten bleibt. Die Dicke der Schicht liegt möglichst im Bereich der Partikelgröße und beträgt zum Beispiel 10 bis 50 μm, damit die mit den Partikeln hervorgerufene größte Feldstärke an der Kugeloberfläche, d. h. der Oberseite der Schicht, vorliegt.

Vorzugsweise sind die Partikel in einem Raster angeordnet, dessen Rastermaß die gleiche Größenordnung wie die Abmessungen der Partikel hat, und zwar insbesondere in einer ähnlichen Größenordnung liegt wie die abzuscheidenden Teilchen. Partikelgröße und Rastermaß betragen zum Beispiel etwa 1 bis 40 μm. Dazu ist noch zu bemerken, daß mit Raster keine mathematisch genaue Konfiguration gemeint ist, sondern nur eine regelmäßige Anordnung von Partikeln mit dazwischen liegenden Abständen, die für die Erzielung hoher Feldstärken durch die einzelnen, voneinander getrennten Partikel benötigt werden. Die Partikel sollen sich jedenfalls nicht berührend zusammenschließen.

Die Kugeln nach der Erfindung können in einem Elektromagnetfilter mit Kugeln ohne Partikel gemeinsam eingesetzt werden. Zu diesem Zweck werden sie vorteilhaft im Verhältnis 1 : 1 in dem gleichen Gehäuse angeordnet und mit einer gemeinsamen Spule magnetisiert. Besonders günstig ist es, wenn die Kugeln mit Partikeln in diesem Gehäuse in dem in Strömungsrichtung hinteren Teil, bei einer Strömung von unten nach oben also in dem oberen Teil liegen, weil dann die Kugeln ohne Partikel größere ferromagnetische Schwebstoffe anlagern, während die Kugeln mit Partikel anschließend für die Abscheidung paramagnetischer Schwebstoffe wirksam werden. Dabei können die Kugeln mit Partikeln einen kleineren Durchmesser als die Kugeln ohne Partikel aufweisen. Der Durchmesserunterschied kann zum Beispiel vorteilhaft 2 mm betragen, so daß Kugeln von 6 und 4 mm Durchmesser eingesetzt werden.

Für die Herstellung der bei der Erfindung verwendeten Partikeln kann man so vorgehen, daß amorphe Metalle zu Pulver zermahlen werden. Das Pulver kann mit Kunststoff gemischt und das Gemisch auf Stahlkugeln aufgebracht werden. Der Kunststoff kann bei der Mischung in flüssiger Form, zum Beispiel als Monomer oder in Lösung vorliegen. Man kann aber auch Kunststoffgranulat verarbeiten.

Anhand der Zeichnung wird die Erfindung näher erläutert. Die

Fig. 1 zeigt als Ausführungsbeispiel ein Elektromagnetfilter mit seinen wesentlichen Teilen in stark vereinfachter, schematischer Darstellung. Die

Fig. 2 und 3 zeigen stark vergrößerte Teilschnitte von Kugeln.

In einem zylindrisch gestalteten Filterbehälter 1 befindet sich ein Filterbett 2 in Gestalt einer Kugelfüllung, wobei die einzelnen Kugeln 3 in der unteren Hälfte magnetische Stahlkugeln mit 6 mm sind und gegebenenfalls mit einem als Rostschutz dienenden Überzug versehen sind. So können die Kugeln 3 beispielsweise vernikkelt oder verchromt sein.

Die Kugeln 4 in der oberen, in Strömungsrichtung hinteren Hälfte der Kugelfüllung haben einen um 2 mm auf 4 mm verkleinerten Durchmesser und bestehen aus dem gleichen Stahl, in den weichmagnetische Partikel auf Eisen- und Nickelbasis eingewalzt sind. Die Permeabilität der Partikel ist mindestens um den Faktor 5, vorzugsweise um den Faktor 20 bis 100 größer als die des Stahls.

Die Kugeln 4 ruhen zusammen mit den Kugeln 3 auf einem Siebboden 6. Die zu reinigende Flüssigkeit, zum Beispiel Kesselspeisewasser, gelangt von unten her durch einen Eintrittsflansch 8 in den Filterbehälter 1 hinein, wird dann durch einen Pralleller 9 verteilt und durchsetzt über die gesamte Fläche des Siebbodens 6 nahezu gleichmäßig verteilt das Filterbett 2. Durch den Austrittsflansch 10 verläßt die gereinigte Flüssigkeit den Filterbehälter 1. Ein Siebkörper 11 verhindert, daß mitgerissene Kugeln 4 aus dem Filterbehälter 1 austreten können.

Der Filterbehälter 1 ist von der Erregungsspule 14 umgeben, die für eine hohe elektrische Leistung ausgelegt ist. Zur Kühlung werden zwischen einzelnen oder mehreren Windungen Luftspalte 15 gebildet, die einen Durchtritt der in Richtung der Pfeile 16 und 17 eintretenden Kühlluft ermöglichen. Die Kühlluft strömt in Richtung der Pfeile 18 nach oben hin.

Die ganze Anordnung wird von einem Stützgerüst 19 getragen, wobei ein mit Ausnehmungen versehener ringförmiger Körper 20 sowohl der Stützung der Spule 14 als auch des Filterbehälters 1 dient. Die Spule 14 ist in ihrer Höhe und in ihrer Anordnung in bezug auf das Filterbett so bemessen, daß die Kugelfüllung 2 nach oben und nach unten etwa 10 Zentimeter über die Begrenzungen der Spule 14 hinausgeht. Das Filter ist oben mit einem Lochblech 21 und unten mit einem Lochblech 22 verkleidet.

Die elektrische Leistung der Spule 14 weist nicht nur für die Erregung des Filters hohe Werte auf, vielmehr werden auch beim Spülvorgang hohe Entmagnetisierungsströme notwendig, da das Filterbett 2 aus Stahlkugeln 3, 4 nicht nur eine hohe Aufmagnetisierungsarbeit erfordert, sondern die magnetischen Kugeln 3, 4 auch zum Entmagnetisieren entsprechend hoher Magnetfelder bedürfen. Zur Erzeugung der Betriebsgleichspannung kann man eine Thyristorsteuerung verwenden, die so aufgebaut ist, daß sie auch der Entmagnetisierung dient, wobei eine abklingende Wechselspannung niedriger Frequenz oder ein zerhackter Gleichstrom abwechselnd gegensinniger Polarität ein Absenken der Ströme bis auf den Nullwert gestatten.

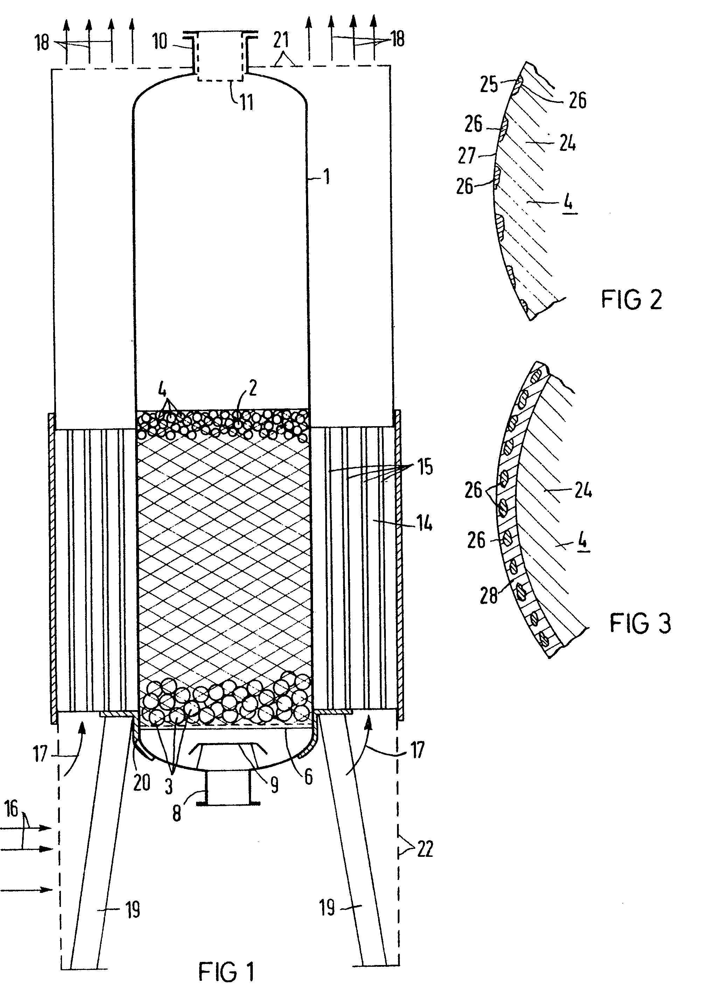

Fig. 2 zeigt in einer übertrieben großen Darstellung Einzelheiten der Kugeln 4. Man erkennt den aus magnetischem Stahl bestehenden Grundkörper 24, der einen Durchmesser von 4 mm aufweist. In die Oberfläche 25 des Grundkörpers 24 sind Partikel 26 durch Walzen eingebracht, die von amorphen Metallen mit einer wesentlich größeren Permeabilität als der Stahl der Kugelgrundkörper gebildet werden. Die Partikel auf Eisen- und Nickelbasis sind in der Fig. 2 vergrößert dargestellt, denn sie haben Größenabmessungen von etwa 40 μm.

Die Fig. 2 zeigt, daß die einzelnen Partikel 26 in der Oberfläche voneinander getrennt sitzen, d. h. zwischen zwei benachbarten Partikeln 26 ist ein Abstand 27 vorhanden, in dem der Stahl des Grundkörpers die Oberfläche der Kugel bildet. Daraus ergibt sich eine Rasteranordnung mit einem Rastermaß in der gleichen Größenordnung wie die Partikelgröße.

Bei dem Ausführungsbeispiel nach Fig. 3 ist auf einen Kugelgrundkörper 24 aus magnetischem Stahl eine zum Beispiel 50 μm dicke Schicht 28 aufgebracht, die aus Kunststoff, zum Beispiel Polytetrafluoräthylen, Polyamid oder dergleichen besteht, in den Partikel 26 mit Abstand voneinander eingebettet sind. Die Partikel 26 können wiederum amorphes Metall sein. Sie werden zum Beispiel in Form einer Mischung mit dem Kunststoff auf den Kugelgrundkörper 24 aufgebracht.

**Patentansprüche**

1. Elektromagnetfilter mit einer Spule (14) zur Magnetisierung von kugelförmigen Körpern aus ferromagnetischem Material in einem Gehäuse (1), das von dem zu filternden Medium durchströmt wird, dadurch gekennzeichnet, daß die Kugeloberfläche (25) getrennte Partikel (26) wesentlich größerer Permeabilität aufweist.

2. Elektromagnetfilter nach Anspruch 1, dadurch gekennzeichnet, daß die Partikel (26) in einen magnetischen Kugelgrundkörper (24) eingewalzt sind.

3. Elektromagnetfilter nach Anspruch 1, dadurch gekennzeichnet, daß die Partikel (26) in eine unmagnetische Schicht (28) aus Kunstharz, Glas oder dergleichen eingebettet sind.

4. Elektromagnetfilter nach Anspruch 1, 2 oder 3, dadurch gekennzeichnet, daß die Partikel (26) in einem Raster angeordnet sind, dessen Rastermaß die gleiche Größenordnung wie die Abmessungen der Partikel (26) hat.

5. Elektromagnetfilter nach Anspruch 4, dadurch gekennzeichnet, daß Partikelgröße und Rastermaß etwa 1 bis 40 μm betragen.

6. Elektromagnetfilter nach einem der Ansprüche 1 bis 5, gekennzeichnet durch amorphe Metalle als Partikelwerkstoff.

7. Elektromagnetfilter nach einem der Ansprüche 1 bis 6, dadurch gekennzeichnet, daß Kugeln (4) mit und Kugeln (3) ohne Partikel im Verhältnis 1 : 1 im Gehäuse (1) angeordnet sind.

8. Elektromagnetfilter nach Anspruch 7, dadurch gekennzeichnet, daß die Kugeln (4) mit Partikeln (26) in Strömungsrichtung hinter den Kugeln (3) ohne Partikel liegen.

9. Elektromagnetfilter nach Anspruch 7 oder 8, dadurch gekennzeichnet, daß die Kugeln (4) mit Partikeln (26) einen kleineren Durchmesser als die Kugeln (3) ohne Partikel aufweisen.

10. Verfahren zum Herstellen von Kugeln nach dem Kennzeichen des Anspruchs 1, dadurch gekennzeichnet, daß amorphe Metalle zu Pulver zermahlen werden, daß das Pulver mit Kunststoff gemischt und daß das Gemisch auf Stahlkugeln aufgebracht wird.

## Claims

1. An electromagnetic filter having a coil (14) for the magnetisation of spherical bodies consisting of ferromagnetic material in a housing (1) through which flows the medium which is to be filtered, characterised in that the spherical surface (25) exhibits separate particles (26) of substantially greater permeability.

2. An electromagnetic filter as claimed in claim 1, characterised in that the particles (26) are rolled into a magnetic basic spherical body.

3. An electromagnetic filter as claimed in claim 1, characterised in that the particles (26) are embedded in a non-magnetic layer (28) of synthetic resin, glass, or the like.

4. An electromagnetic filter as claimed in claim 1, 2 or 3, characterised in that the particles (26) are arranged in a grid pattern whose dimensions are of the same order of magnitude as the dimensions of the particles (26).

5. An electromagnetic filter as claimed in claim 4, characterised in that the particle size and grid dimensions are about 1 to 40 μm.

6. An electromagnetic filter as claimed in one of the claims 1 to 5, characterised by amorphous metals as particle material.

7. An electromagnetic filter as claimed in one of the claims 1 to 6, characterised in that spheres (4) with, and spheres (3) without particles, are arranged in the housing (1) in the ratio 1 : 1.

8. An electromagnetic filter as claimed in claim 7, characterised in that the spheres (4) with particles are located behind the spheres (3) without particles, considered in the direction of flow.

9. An electromagnetic filter as claimed in claim 7 or 8, characterised in that the spheres (4) with particles (26) have a smaller diameter than the spheres (3) without particles.

10. A process for the production of spheres as claimed in the characterising part of claim 1, characterised in that amorphous metals are ground to form a powder, that the powder is mixed with synthetic resin material, and that the mixture is applied to steel spheres.

## Revendications

1. Filtre électromagnétique comportant une bobine (4) servant aimanter des corps en forme de billes, constitués en un matériau ferromagnétique et situé dans une enceinte (1) qui est traversée par le milieu devant être filtré, caractérisé par le fait que la surface (25) des billes comporte des particules séparées (26) possédant une perméabilité nettement plus grande.

2. Filtre électromagnétique suivant la revendication 1, caractérisé par le fait que les particules (26) sont introduites par laminage dans un corps de base magnétique (24) des billes.

3. Filtre électromagnétique suivant la revendication 1, caractérisé par le fait que les particules (26) sont noyées dans une couche amagnétique (28) constituée par une résine synthétique, du verre ou analogue.

4. Filtre électromagnétique suivant la revendication 1, 2 ou 3, caractérisé par le fait que les particules (26) sont disposées selon un réseau dont le pas possède le même ordre de grandeur que les dimensions des particules (26).

5. Filtre électromagnétique suivant la revendication 4, caractérisé par le fait que la taille des particules et le pas du réseau sont compris entre environ 1 et 40 μm.

6. Filtre électromagnétique suivant les revendications 1 à 5, caractérisé par l'utilisation de métaux amorphes en tant que matériau pour les particules.

7. Filtre électromagnétique suivant l'une des revendications 1 à 6, caractérisé par le fait que des billes (4) sans particules, et des billes (3) compordes particules sont disposées dans l'enceinte (1) dans le rapport 1 : 1.

8. Filtre électromagnétique suivant la revendication 7, caractérisé par le fait que les billes (4) comportant des particules (26) sont situées, par rapport au sens de l'écoulement, en aval des billes (3) ne comportant pas de particules.

9. Filtre électromagnétique suivant la revendication 7 ou 8, caractérisé par le fait que les billes (4) comportant des particules (26) possèdent un diamètre qui est inférieur à celui des billes (3) ne comportant pas de particules.

10. Procédé pour fabriquer des billes selon la caractéristique de la revendication 1, caractérisé par le fait que l'on broie des métaux amorphes pour obtenir une poudre, qu'on mélange la poudre à une matière plastique et que l'on applique le mélange sur des billes d'acier.

FIG 1

FIG 2

FIG 3